# EUROPÄISCHE PATENTSCHRIFT

(11) **EP 2 397 354 B1**
(45) Veröffentlichungstag und Bekanntmachung des Hinweises auf die Patenterteilung: **16.09.2015**
(21) Anmeldenummer: 11004853.5
(22) Anmeldetag: 15.06.2011
(51) Int. Cl.: B60K 6/10, B60K 6/30, B60K 6/46, B60L 11/16

(54) **Schwerlastfahrzeug mit Schwungmassenspeicherantrieb**
Heavy duty vehicle with flywheel accumulator drive
Véhicule poids lourd avec entraînement par volant d'inertie

(30) Priorität: 15.06.2010 DE 102010023779; 15.06.2010 DE 202010009105 U
(43) Veröffentlichungstag der Anmeldung: 21.12.2011
(73) Patentinhaber: Scheuerle Fahrzeugfabrik GmbH, 74629 Pfedelbach (DE)
(72) Erfinder: Riek, Thomas, 74629 Pfedelbach (DE)
(74) Vertreter: Leitner, Waldemar

(56) Entgegenhaltungen:
- EP-A2- 0 437 266
- EP-A2- 0 460 850
- WO-A1-95/31855
- WO-A1-96/39321
- WO-A1-2004/065166

## Beschreibung

Die Erfindung betrifft ein Schwerlastfahrzeug mit einem Schwungmassenspeicherantrieb, welches mindestens einen Schwungmassenspeicher mit einem Generator aufweist, durch den die im Schwungmassenspeicher gespeicherte kinetische Energie in elektrische Energie umwandelbar ist, und welches mindestens einen Elektromotor zum Antrieb mindestens einer Achslinie des Schwerlastfahrzeugs aufweist, der vom Generator mit elektrischer Energie versorgt wird, sowie ein Verfahren zum Betreiben eines derartigen Fahrzeugs.

Fahrzeuge, in denen die zu ihrem Betrieb erforderliche Energie in einem Schwungmassenspeicher gespeichert ist, sind bekannt. Insbesondere werden derartige Fahrzeuge zum Transport von schweren Lasten eingesetzt, z. B. als so genannte Hafentransporter, welche dazu dienen, Container von einem Kai zu einem Lagerareal und umgekehrt zu transportieren. Typisch für den Betriebszyklus eines derartigen Fahrzeugs ist ein relativ hoher Anteil von Standzeiten, in denen das Fahrzeug - z. B. zum Be- oder Entladen - steht, und einen relativ geringen Anteil von Fahrzeiten, in denen das Fahrzeug sich z. B. vom Kai zum Lagerareal bewegt. Ein derartiger Betriebszyklus ist für den Einsatz eines Schwungmassenspeicherantriebs prädestiniert, da der Schwungmassenspeicher des Fahrzeugs während der Standzeiten einfach aufgeladen werden kann, indem das Fahrzeug an ein externes Versorgungsnetz angeschlossen wird und der Schwungmassenspeicher von einem mit ihm gekoppelten bzw. in ihm integrierten und vom externen Versorgungsnetz gespeisten Elektromotor aufgeladen wird.

Nachteilig daran ist, dass das wie vorstehend beschrieben ausgebildete Fahrzeug zum Aufladen des Schwungspeichers immer eine Ladestation anfahren muss bzw. an der Be- bzw. Entladestelle eine Lademöglichkeit für den Schwungmassenspeicher des bekannten Fahrzeugs vorgesehen sein muss.

Aus der DE 10 2007 033 575 ist ein Antriebsstrang für ein Hybrid-Fahrzeug bekannt, der einen Verbrennungsmotor, ein Getriebe, eine Elektromaschine und einen elektrischen Energiespeicher umfasst. Die Elektromaschine ist als Generator zum Laden des elektrischen Energiespeichers und/oder unter Entladen des elektrischen Energiespeichers als Motor nutzbar. Der elektrische Energiespeicher ist als Schwungmassenspeicher mit zugeordneter zweiter Elektromaschine ausgeführt, wobei der Schwungmassenspeicher über eine eigene Kupplung mit dem Verbrennungsmotor mechanisch koppelbar und damit auch mechanisch start- und entladbar ist. Ein mit einem derartigen Antriebsstrang ausgestattetes Hybrid-Fahrzeug erlaubt dann ein rein elektrisches Fahren bzw. die Unterstützung des Verbrennungsmotors durch die Elektromaschine und das elektrische Laden des Energiespeichers über den Verbrennungsmotor. Beim rein elektrischen Fahren treibt nur die als Motor betriebene Elektromaschine das Hybrid-Fahrzeug an. Soll die Elektromaschine den Verbrennungsmotor unterstützen, so treibt dann die als Motor betriebene Elektromaschine zusammen mit dem Verbrennungsmotor das Hybridfahrzeug an. Dabei gibt jeweils der Schwungmassenspeicher mechanische Energie an die zugeordnete zweite Elektromaschine ab, die als Generator betrieben wird und somit die elektrische Energie zum Antrieb der Elektromaschine liefert. Zum Laden des Energiespeichers wird die als Generator betriebene Elektromaschine vom Verbrennungsmotor angetrieben, wobei die von der Elektromaschine abgegebene elektrische Energie die dem Schwungmassenspeicher zugeordnete zweite Elektromaschine antreibt. Mithin wird die dem Schwungmassenspeicher zugeordnete zweite Elektromaschine als Motor, zum mechanischen Antreiben des Schwungmassenspeichers und damit zu dessen Aufladung benutzt. Hierdurch ist eine Lastpunktverschiebung des Verbrennungsmotors zu dessen Verbrauchsoptimierung möglich. Der bekannte Antriebsstrang und somit ein mit ihm ausgerüstetes Hybrid-Fahrzeug sieht also vor, dass der Verbrennungsmotor sowohl zum Fahrantrieb des Hybrid-Fahrzeugs als auch zum Aufladen des Schwungmassenspeichers verwendet wird. Der Verbrennungsmotor muss also derart ausgelegt sein, dass er sowohl zum Fahrantrieb des bekannten Hybrid-Fahrzeugs als auch zum Aufladen des Schwungmassenspeichers in der Lage ist. Eine derartige Konstruktion hat den Nachteil, dass hierdurch nicht gewährleistet ist, dass der Verbrennungsmotor in seinen optimalen Kennfeldbereich betrieben werden kann.

Die WO 95/31855 A1 beschreibt ein Fahrzeug, welches einen Schwungmassenspeicher in einem Generator aufweist, durch die in die im Schwungmassenspeicher gespeicherte kinetische Energie in elektrische Energie umwandelbar ist, und welches zumindest einen Elektromotor zum Antrieb mindestens einer Achslinie des Fahrzeugs aufweist, der von dem Generator des Schwungmassenspeichers mit elektrischer Energie versorgt wird. Es ist ein Verbrennungsmotor vorgesehen, der einen weiteren Generator antreibt. Dieser Generator ist mit einem DC-Bus verbunden, der seinerseits mit dem Elektromotor verbunden ist, der zum Antrieb einer Achslinie des Fahrzeugs dient. Andererseits ist der DC-Bus mit einem Motor/Generator verbunden, der den Schwungmassenspeicher antreibt. Hierbei ist vorgesehen, dass der Schwungmassenspeicher bei einer anfänglichen Beschleunigung den überwiegenden Teil der benötigten Energie bereitstellt, während der Verbrennungsmotor die Energie, die für eine Bewegung des Fahrzeugs mit einer konstanten Geschwindigkeit erforderlich ist, und auch die Energie, die zum Wiederaufladen des Schwungmassenspeichers benötigt wird, erzeugt. Auch hier muss der Verbrennungsmotor also derart ausgelegt sein, dass er sowohl zum Fahrantrieb des Fahrzeugs als auch zum Aufladen des Schwungmassenspeichers geeignet ist. Das bekannte Fahrzeug besitzt daher wieder den Nachteil, dass dort nicht gewährleistet ist, dass der Verbrennungsmotor in seinem optimalen Kennfeldbereich betrieben werden kann.

WO 2004/065166 A1 beschreibt ein Fahrzeug, das mehrere Achslinien aufweist, deren Räder von Elektromotoren angetrieben sind. Diese Elektromotoren werden von Batterien mit elektrischer Energie versorgt. Die Batterien werden kontinuierlich von Generatoren aufgeladen.

Es ist daher Aufgabe der vorliegenden Erfindung, ein Schwerlastfahrzeug der eingangs genannten Art sowie ein Verfahren zu seinem Betrieb derart weiterzuentwickeln, dass ein Anschluss an ein externes elektrisches Versorgungsnetz nicht mehr erforderlich ist und eine verbesserte Ausnutzung des Verbrennungsmotors gegeben ist.

Diese Aufgabe wird erfindungsgemäß dadurch gelöst, dass das Schwerlastfahrzeug einen Verbrennungsmotor oder eine Brennstoffzelle aufweist, der bzw. die einen Generator antreibt, welcher ausschließlich die zum Aufladen des oder der Schwungmassenspeicher erforderliche elektrische Energie erzeugt, dass diese elektrische Energie dem Generator des oder der Schwungmassenspeicher zugeführt ist, und dass dieser Generator die Schwungmassen des oder der Schwungmassenspeicher rotationsantreibt.

Durch die erfindungsgemäßen Maßnahmen wird in vorteilhafter Art und Weise ein Schwerlastfahrzeug geschaffen, welches sich dadurch auszeichnet, dass es zum Aufladen des oder der Schwungmassenspeicher nicht mehr an ein externes Versorgungsnetz angeschlossen werden muss, da die zur Erzeugung der in dem Schwungmassenspeicher gespeicherten Rotationsenergie erforderliche Energie von dem erfindungsgemäß vorgesehenen Verbrennungsmotor erzeugt wird. Indem nun vorgesehen ist, dass der Verbrennungsmotor des erfindungsgemäßen Schwerlastfahrzeugs ausschließlich dazu verwendet wird, den oder mindestens einen der Schwungmassenspeicher aufzuladen, wird in vorteilhafter Art und Weise erreicht, dass der Verbrennungsmotor stets in seinem optimalen Kennfeldbereich betrieben werden kann, da er nur zum Aufladen des oder der Schwungmassenspeicher dient, nicht aber zum eigentlichen Fahrantrieb des erfindungsgemäßen Schwerlastfahrzeugs. In vorteilhafter Art und Weise muss daher der Verbrennungsmotor nicht, in einem Teillastbetrieb betrieben werden muss, wodurch eine effiziente Ausnutzung des den Verbrennungsmotor speisenden Kraftstoffs und dadurch eine verminderte Umweltbelastung erzielt wird. Außerdem kann er kleiner dimensioniert werden, wodurch eine weitere Kraftstoffeinsparung erzielt wird.

Ein weiterer Vorteil des erfindungsgemäßen Schwerlastfahrzeugs liegt darin, dass das erfindungsgemäße Schwerlastfahrzeug frei von Hydrauliköl ist, da sowohl der eigentliche Fahrantrieb als auch Lenkung und Bremsen elektrisch betrieben werden können. Dies ist insbesondere beim Einsatz eines derartigen Schwerlastfahrzeugs als Hafentransporter von Vorteil, da hierdurch keine Gefahr besteht, dass das Hafenwasser durch bei einem Defekt des Schwerlastfahrzeugs austretendes Hydrauliköl verschmutzt wird.

Eine vorteilhafte Weiterbildung der Erfindung sieht vor, dass der Verbrennungsmotor als ein Gasmotor ausgebildet ist. Eine derartige Maßnahme besitzt den Vorteil, dass im erfindungsgemäßen Schwerlastfahrzeug keine Flüssigkeiten vorhanden sind, die zu Umweltproblemen führen können.

Weitere vorteilhafte Weiterbildungen der Erfindung sind Gegenstand der Unteransprüche.

Weitere Einzelheiten der Erfindung sind dem Ausführungsbeispiel zu entnehmen, das im folgenden anhand der einzigen Figur beschrieben wird. Es zeigt:
- Figur 1:: eine schematische Darstellung eines Ausführungsbeispiels eines Schwerlastfahrzeugs in einer Seitenansicht,
- Figur 2:: das Ausführungsbeispiel der Figur 1 in einer Vorderansicht, und
- Figur 3:: das Ausführungsbeispiel der Figur 1 in einer Unteransicht.

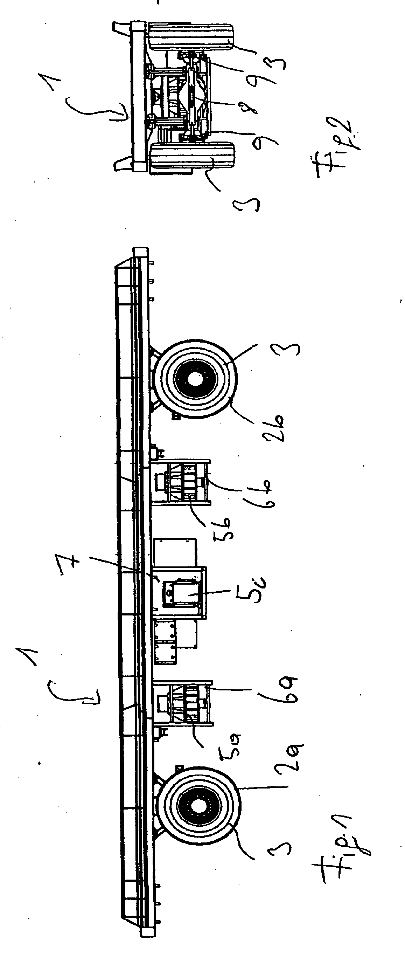

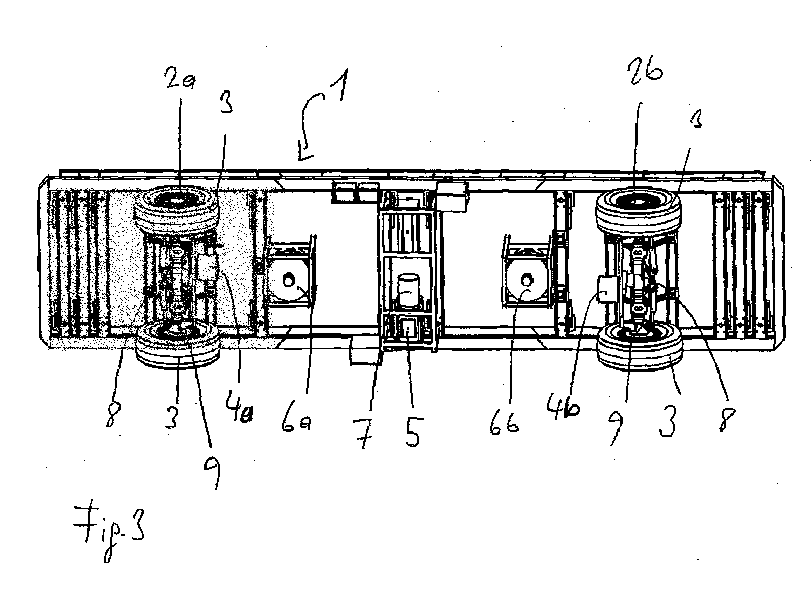

Das in den Figuren 1 bis 3 dargestellte und allgemein mit 1 bezeichnete Schwerlastfahrzeug weist zwei Achslinien 2a, 2b auf, die mit einer entsprechenden Anzahl von Rädern 3 versehen sind. Jeder Achslinie 2a, 2b ist zum Antrieb der Räder 3 ein Elektromotor 4a, 4b zugeordnet. Die zum Antrieb der Elektromotoren 4a, 4b benötigte Energie ist in zwei Schwungmassenspeichern 6a, 6b gespeichert, die über nicht gezeigte Stromkabel jeweils mit den Elektromotoren 4a, 4b verbunden sind. Jeder Schwungmassenspeicher 6a, 6b weist einen Generator 5a, 5b auf, welcher den zum Antrieb der Elektromotoren 4a, 4b benötigten Strom erzeugt, indem er die in den Schwungmassenspeichern 6a, 6b gespeicherte Rotationsenergie in elektrische Energie umwandelt.

Zur Erzeugung der in den Schwungmassenspeicher 6a, 6b gespeicherten kinetischen Rotationsenergie ist ein Verbrennungsmotor 7 vorgesehen, der seinerseits einen Generator 5c antreibt, welcher den zum Laden der Schwungmassenspeicher 6a, 6b erforderlichen Strom erzeugt. Der vom Generator 5c erzeugte Strom wird den Generatoren 5a bzw. 5b der Schwungmassenspeicher 6a bzw. 6b zugeführt, die dann als Elektromotoren fungieren und derart die Schwungmassen der Schwungmassenspeicher 6a bzw. 6b rotationsantreiben.

Die von den Generatoren 5a, 5b der Schwungmassenspeicher 6a, 6b erzeugte elektrische Energie wird nicht nur zum Antrieb der Elektromotoren 4a, 4b und somit zum Fahrbetrieb verwendet, sondern es ist vorzugsweise vorgesehen, dass beim beschriebenen Schwerlastfahrzeug 1 auch die Lenkung und/oder Bremsen 9 elektrisch angetrieben werden. Zur Lenkung des Schwerlastfahrzeugs 1 weist jede Achse 2a bzw. 2b einen elektrisch angetriebenen, mit dem Generator 5a bzw. 5b des entsprechenden Schwungmassenspeichers 6a bzw. 6b verbundenen Lenkzylinder 8 auf, durch den der Lenkwinkel der Räder 3 einer jeden Achse 2a, 2b veränderbar ist.

Die vorstehend beschriebene Ausgestaltung des Schwerlastfahrzeugs 1 mittels eines elektrischen Antriebs der Achslinien 2a, 2b und vorzugsweise der Lenkung und/oder der Bremsen besitzt den Vorteil, dass beim beschriebenen Schwerlastfahrzeug 1 auf Hydrauliköle vollständig verzichtet werden kann. Das beschriebene Schwerlastfahrzeug 1 eignet sich daher insbesondere für einen Einsatz in umweltsensitiven Zonen, wie z. B. in einem Hafen, da bei einem Unfall und/oder einem Defekt des Schwerlastfahrzeugs 1 kein Hydrauliköl ins Hafenwasser gelangen kann.

Vorzugsweise ist des weiteren vorgesehen, dass der Verbrennungsmotor 7 als ein Gasmotor oder eine Brennstoffzelle ausgebildet ist. Eine derartige Maßnahme besitzt den Vorteil, dass hierdurch beim Schwerlastfahrzeug 1 keine Flüssigkeiten vorhanden sind, die an die Umwelt freigesetzt werden könnten.

Die Funktionsweise des Schwerlastfahrzeugs 1 ist nun wie folgt: Zum Aufladen der Schwungmassenspeicher 6a, 6b wird der Verbrennungsmotor 7 gestartet und treibt den Generator 5c an. Die von diesem Generator 5c erzeugte elektrische Energie wird den Generatoren 5a, 5b der Schwungmassenspeicher 6a, 6b zugeführt, welche nun die Schwungmassen der Schwungmassenspeicher 6a, 6b in Rotation versetzen, wodurch kinetische Energie in Form von Rotationsenergie in den Schwungmassenspeichern 6a, 6b gespeichert wird. Da der Verbrennungsmotor 7 ausschließlich dazu dient, die Schwungmassenspeicher 6a, 6b wie vorstehend beschrieben anzutreiben, kann er in vorteilhafter Art und Weise ausschließlich auf die beim Aufladen der Schwungmassenspeicher 6a, 6b auftretenden Anforderungen abgestimmt wird. Der Verbrennungsmotor 7 kann somit stets in seinem optimalen Kennfeldbereich betrieben werden, was zu einer verbesserten Energieausnutzung und somit zu einer verringerten Umweltbelastung durch einen geringeren Kraftstoffverbrauch führt.

Nachdem nun die Schwungmassenspeicher 6a, 6b aufgeladen wurden, wird der Verbrennungsmotor 7 abgeschalten. Es ist somit beim beschriebenen Ausführungsbeispiel nicht mehr erforderlich, dass der die Schwungmassenspeicher 6a, 6b aufladende Verbrennungsmotor 7 über eine lange Zeit in einem Teillastbereich betrieben wird.

Sinkt nun der Energieinhalt der Schwungmassenspeichern 6a und/oder 6b unter einen bestimmten Wert, wird der Verbrennungsmotor 7 gestartet und der oder die Schwungmassenspeicher 6a, 6b wie vorstehend beschrieben aufgeladen.

Zusammenfassend ist festzuhalten, dass das beschriebene Schwerlastfahrzeug 1 sowie das Verfahren zu seinem Betrieb sich dadurch auszeichnen, dass der Verbrennungsmotor 7 nur zum Aufladen der Schwungmassenspeicher 6a, 6b dient und nicht zum Fahrbetrieb. Der Verbrennungsmotor 7 kann dadurch viel leistungsschwächer und damit kleiner und energiesparender ausgebildet werden kann, als dies bei bekannten Schwerlastfahrzeugen der Fall ist. Da der Verbrennungsmotor 7 nur zum Antrieb der Schwungmassenspeicher 6a, 6b dient, kann er abgeschalten werden, nachdem die Schwungmassenspeicher 6a, 6b aufgeladen sind, so dass ein energetisch ungünstiger, umweltbelastender und motorschädigender Teillastbetrieb vermieden werden kann.

## Patentansprüche

1. Schwerlastfahrzeug mit Schwungmassenspeicherantrieb, welches mindestens einen Schwungmassenspeicher (6a, 6b) mit einem Generator (5a, 5b) aufweist, durch den die im Schwungmassenspeicher (6a, 6b) gespeicherten kinetische Energie in elektrische Energie umwandelbar ist, und welches mindestens einen Elektromotor (4a, 4b) zum Antrieb mindestens einer Achslinie (2a, 2b) des Schwerlastfahrzeugs (1) aufweist, der von dem Generator (5a, 5b) mit elektrischer Energie versorgt wird, **dadurch gekennzeichnet, dass** das Schwerlastfahrzeug einen Verbrennungsmotor (7) oder eine Brennstoffzelle aufweist, der bzw. die einen Generator (5c) antreibt, welcher ausschließlich die zum Aufladen des oder der Schwungmassenspeicher (6a, 6b) erforderliche elektrische Energie erzeugt, dass diese elektrische Energie dem Generator (5b, 5c) des oder der Schwungmassenspeicher (6a, 6b) zugeführt ist, und dass dieser Generator (5a, 5b) die Schwungmassen des oder der Schwungmassenspeicher (6a, 6b) rotationsantreibt.

2. Schwerlastfahrzeug nach Anspruch 1, **dadurch gekennzeichnet, dass** der Verbrennungsmotor (7) ein Gasmotor ist.

3. Schwerlastfahrzeug nach einem der vorangehenden Ansprüche, **dadurch gekennzeichnet, dass** mindestens eine Achslinie (2a, 2b) einen elektrischen Lenkzylinder (8) aufweist, durch den der Lenkwinkel der Räder (3) der Achslinie (2a, 2b) veränderbar ist.

4. Schwerlastfahrzeug nach Anspruch 3, **dadurch gekennzeichnet, dass** der elektrische Lenkzylinder (8) mit dem Generator (5a, 5b) des oder der zugeordneten Schwungmassenspeicher (6a, 6b) verbunden ist.

5. Verfahren zum Betreiben eines Schwerlastfahrzeugs mit Schwungmassenspeicherantrieb, bei dem die zum Antrieb des Schwerlastfahrzeugs (1) erforderliche elektrische Energie von mindestens einem Generator (5a, 5b) eines Schwungmassenspeichers (6a, 6b) erzeugt wird, **dadurch gekennzeichnet, dass** ein Verbrennungsmotor (7) oder eine Brennstoffzelle verwendet wird, wodurch über einen weiteren Generator (5c) ausschließlich die zum Aufladen des oder der Schwungmassenspeicher (6a, 6b) erforderliche elektrische Energie erzeugt wird, und dass nach dem Aufladen der Schwungmassenspeicher (6a, 6b) der Verbrennungsmotor (7) oder die Brennstoffzelle abgeschalten wird.

## Claims

1. Heavy duty vehicle with a flywheel accumulator drive, having at least one flywheel storage (6a, 6b) with a generator (5a, 5b), by which kinetic energy stored in the flywheel storage (6a, 6b) can be transformed into electric energy, and having at least one electric motor (4a, 4b) for driving at least one axis line (2a, 2b) of the heavy duty vehicle (1), which is supplied by the generator (5a, 5b) with electric energy, **characterized in that** the heavy duty vehicle has a combustion engine (7) or a fuel cell, which drives the generator (5c), which exclusively serves for generating the electric energy required for loading the one or the flywheel storages (6a, 6b), that said electric energy is fed to the generator (5a, 5b) of the one or of the flywheel storages (6a, 6b), and that said generator (5a, 5b) rotably drives the flywheel masses of the one or of the flywheel storages (6a, 6b).

2. Heavy duty vehicle according to claim 1, **characterized in that** the combustion engine (7) is a gas motor.

3. Heavy duty vehicle according to one of the previous claims, **characterized in that** at least one axis line (2a, 2b) comprises an electric steering cylinder (8), by which the steering angle of the wheels (3) of the axis line (2a, 2b) can be changed.

4. Heavy duty vehicle according to claim 3, **characterized in that** the electric steering cylinder (8) is connected with the generator (5a, 5b) of the one or of the associated flywheel storages (6a, 6b).

5. Method for operating a heavy duty vehicle with a flywheel accumulator drive, by which the energy required for driving the heavy duty vehicle (1) is generated by at least one generator (5a, 5b) of a flywheel storage (6a, 6b), **characterized in that** a combustion engine (7) or a fuel cell is used, by which via a further generator (5c) the electric energy required for loading the one or the flywheel storages (6a, 6b) exclusively is generated, and that after loading the flywheel storages (6a, 6b) the combustion engine (7) or the fuel cell is turned off.

## Revendications

1. Véhicule poids lourd comprenant un entraînement par accumulateur de masse d'inertie, lequel présente au moins un accumulateur de masse d'inertie (6a, 6b) pourvu d'un générateur (5a, 5b), grâce auquel l'énergie cinétique accumulée dans l'accumulateur de masse d'inertie (6a, 6b) peut être transformée en énergie électrique, et lequel présente au moins un moteur électrique (4a, 4b) servant à entraîner au moins une ligne d'essieu (2a, 2b) du véhicule poids lourd (1), lequel moteur électrique est alimenté en énergie électrique par le générateur (5a, 5b), **caractérisé en ce que** le véhicule poids lourd présente un moteur à combustion (7) ou une pile à combustible, lequel ou laquelle entraîne un générateur (5c), qui produit exclusivement l'énergie électrique requise aux fins du chargement du ou des accumulateurs de masse d'inertie (6a, 6b), que ladite énergie électrique est amenée au générateur (5b, 5c) du ou des accumulateurs de masse d'inertie (6a, 6b), et que ledit générateur (5a, 5b) entraîne en rotation les masses d'inertie du ou des accumulateurs de masse d'inertie (6a, 6b).

2. Véhicule poids lourd selon la revendication 1, **caractérisé en ce que** le moteur à combustion (7) est un moteur à gaz.

3. Véhicule poids lourd selon l'une quelconque des revendications précédentes, **caractérisé en ce qu'**au moins une ligne d'essieu (2a, 2b) présente un vérin de braquage (8) électrique, grâce auquel l'angle de braquage des roues (3) de la ligne d'essieu (2a, 2b) peut varier.

4. Véhicule poids lourd selon la revendication 3, **caractérisé en ce que** le vérin de braquage (8) électrique est relié au générateur (5a, 5b) du ou des accumulateurs de masse d'inertie (6a, 6b) associés.

5. Procédé servant à faire fonctionner un véhicule poids lourd comprenant un entraînement par accumulateur de masse d'inertie, dans le cadre duquel l'énergie électrique requise aux fins de l'entraînement du véhicule poids lourd (1) est produite par au moins un générateur (5a, 5b) d'un accumulateur de masse d'inertie (6a, 6b), **caractérisé en ce qu'**un moteur à combustion (7) ou une pile à combustible est utilisé, grâce auquel ou à laquelle exclusivement l'énergie électrique requise aux fins du chargement du ou des accumulateurs de masse d'inertie (6a, 6b) est produite par l'intermédiaire d'un autre générateur (5c), et que le moteur à combustion (7) ou une pile à combustible est coupé après le chargement des accumulateurs de masse d'inertie (6a, 6b).
